# EUROPEAN PATENT SPECIFICATION

(11) **EP 1 504 708 B1**
(45) Date of publication and mention of the grant of the patent: **09.11.2005**
(21) Application number: 03017875.0
(22) Date of filing: 05.08.2003
(51) Int. Cl.: A47J 47/16, A47J 45/02

(54) **Combined rack and containers**
Kombination Regal mit Behältern
Etagère combinée avec récipients

(43) Date of publication of application: 09.02.2005
(73) Proprietor: Yang, Heng-Te, Tainan City (TW)
(72) Inventor: Yang, Heng-Te, Tainan City (TW)
(74) Representative: Volpert, Marcus

(56) References cited:
- DE-A- 10 113 119
- GB-A- 2 042 330
- GB-A- 2 243 534
- PATENT ABSTRACTS OF JAPAN vol. 2002, no. 05, 3 May 2002 (2002-05-03) & JP 2002 000475 A (CHUYU SANGYO:KK), 8 January 2002 (2002-01-08)

## Description

This invention relates to a combined rack and containers, particularly to one having an L-shaped rack provided with a plurality of engagement mounts disposed thereon, as it is disclosed for example in document GB-A-2 042 330, a plurality of mounting keyholes disposed in a rear wall thereof, and a plurality of recessed holes disposed adjacent four corners of an outside surface of a bottom thereof, each of the recessed holes provided with a non-slipping member securely fixed therein; a plurality of containers capable of being supported on the rack and each provided with an engagement recess disposed in a bottom thereof, by which the plurality of containers can be securely held on the rack in place by making the engagement recesses of the containers respectively engaged with the engagement mounts of the rack.

### 2. Description of the Prior Art

Generally speaking, there are many containers for seasoning, beauty products, etc. in the house and most of them are placed on the table tops or cabinets. However, they are often placed in bad order and occupied too much space, which greatly increases difficulty in taking them for use because they are liable to be fallen down under collision with other containers and significantly affects the overall aesthetic appearance of the arrangement in the house.

### SUMMARY OF THE INVENTION

The main purpose of the invention is to offer a combined rack and containers that is convenient for securely holding the containers on the rack in place and occupied with little space.

The main feature of the invention is to provide a combined rack and containers, mainly including:
a rack being in an L-shaped form and having a plurality of engagement mounts disposed thereon; and,
a plurality of containers capable of being supported on said rack and each provided with an engagement recess disposed in a bottom thereof.

### BRIEF DESCRIPTION OF DRAWINGS

This invention will be better understood by referring to the accompanying drawings, wherein:
Figure 1 is an exploded perspective view of a combined rack and containers in the present invention;
Figure 2 is a perspective view of the combined rack and containers in the present invention;
Figure 3 is a schematic view of the combined rack and containers in the present invention being attached to a wall by means of suction cups; and,
Figure 4 is a schematic view of the combined rack and containers in the present invention being attached to a wall by means of fastening members.

### DETAILED DESCRIPTION OF THE PREFERRED EMBODIMENT

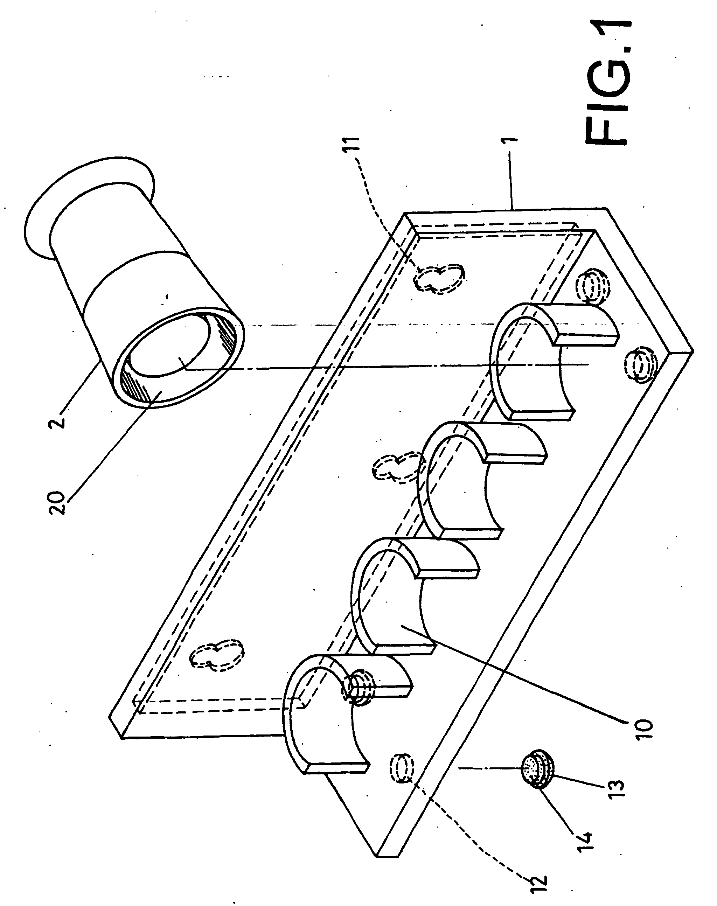

A preferred embodiment of a combined rack and containers in the present invention, as shown in Fig. 1, mainly includes a rack 1 and a plurality of containers 2.

The rack 1 in an L-shaped form has a plurality of engagement mounts 10 disposed thereon and designed to be an approximately semicircular form, a plurality of mounting keyholes 11 disposed in a rear wall thereof, and a plurality of recessed holes 12 disposed adjacent four corners of an outside surface of a bottom thereof. Each of the recessed holes 12 is inserted with a non-slipping member 13 securely therein. Each of the non-slipping members 13 is provided with a projection 14 disposed at a top thereof.

The plurality of containers 2 are capable of being supported on the rack 1 and each provided with an annular engagement recess 20 disposed in a bottom thereof.

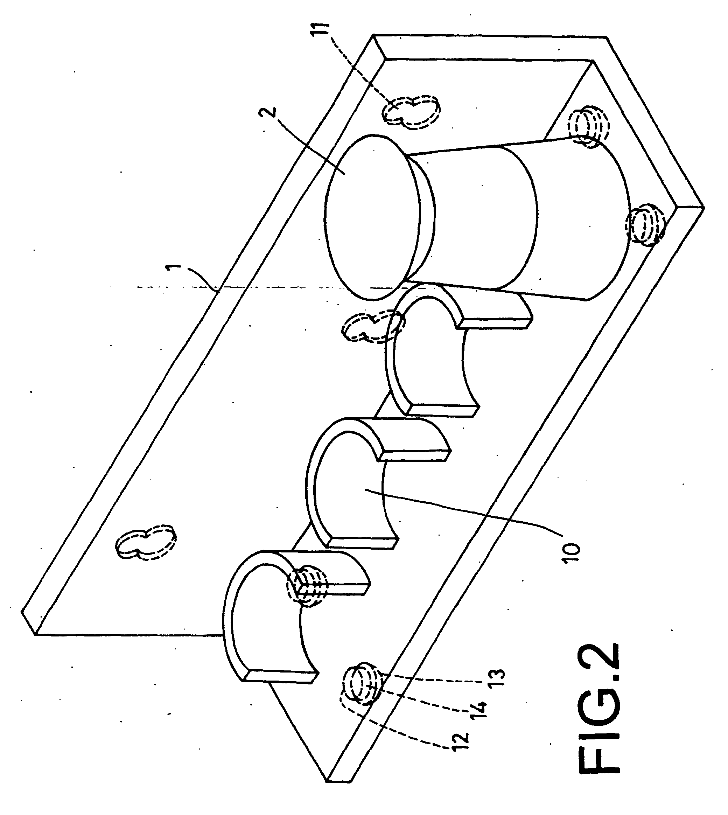

In assembling, referring to Figs. 2, 3 and 4, firstly add an adhesive material on the projections 14 of the non-slipping members 13 and then insert the projections 14 respectively into the recessed holes 12 of the rack 1. Secondly, place the rack 1 on a table top or a cabinet. At this time, the non-slipping members 13 located under the bottom of the rack 1 can prevent the rack 1 from slipping away. Finally, make the engagement recesses 20 of the plurality of containers 2 respectively engaged with the engagement mounts 10 of the rack 1 so that the containers 2 can be securely held on the rack 1 in place, by which the containers 2, such as varied seasoning canisters used in the kitchen, can be arranged in good order, neat and beautiful in appearance, and easy to be taken for use without the danger of being fallen down under collision with other containers.

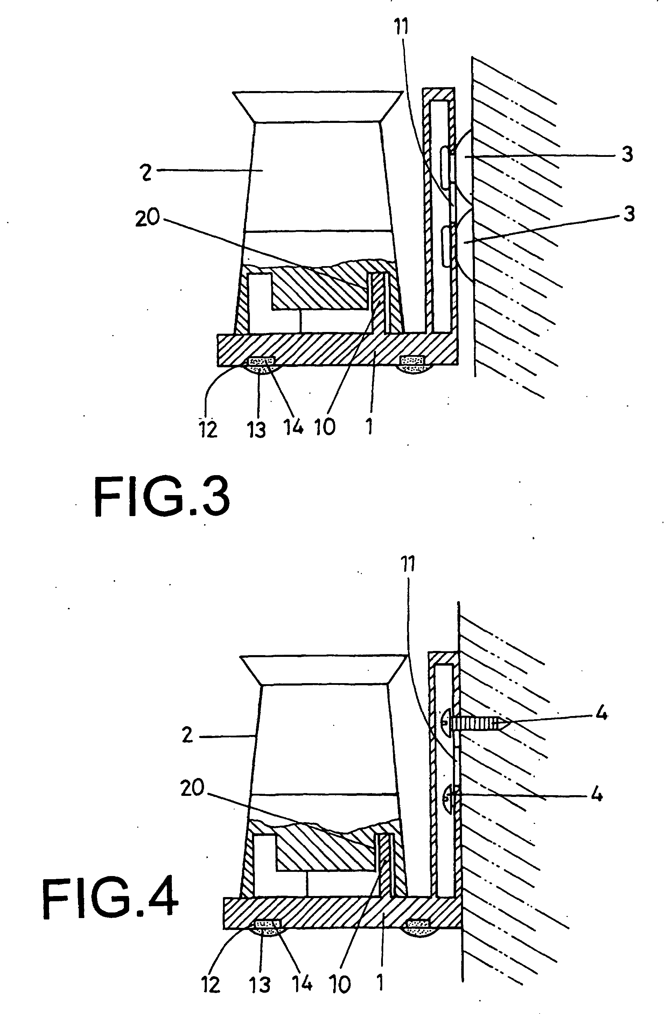

Moreover, as shown in Fig. 3, suction cups 3 are capable of being connected with the mounting keyholes 11 of the rear wall of the rack 1 for attaching to smooth surfaces, such as glass, outer wall surfaces of refrigerators, etc., so that the rack 1 may be securely fastened to such smooth surfaces. And then, make the engagement recesses 20 of the plurality of containers 2 respectively engaged with the engagement mounts 10 of the rack 1 so that the containers 2 can be securely held on the rack 1 in place without the danger of being fallen down.

Furthermore, as shown in Fig. 4, fastening members 4 are capable of being directly nailed into a wall for extending through the mounting keyholes 11 of the rack 1 to make the rack 1 securely fastened to the wall, by which the containers 2 can also be securely held on the rack 1 in place, easy to be arranged, convenient to be taken for use and only occupied little space.

The invention has the following advantages, as can be understood from the aforesaid description.
1. The combined rack and containers in the present invention is very simple in assembling.
2. The containers 2 in the present invention are easy to be arranged in good order and securely held on the rack 1, capable of saving storage space and convenient to be taken for use.
3. The combined rack and containers in the present invention may be placed on a table top or fastened to a wall or any smooth surfaces, very convenient in use.

## Claims

1. A combined rack and containers comprising:
an L-shaped shaped rack (1) provided with a plurality of engagement mounts (10) disposed thereon;
a plurality of containers (2) capable of being supported on said rack (1) and each of those containers (2) provided with an engagement recess (20) by which the plurality of containers (2) can be held in place on the rack (1) by making the engagement recesses (20) of the containers (2) respectively engaged with the engagement mounts (10) of the rack (1),
**characterized in that**
each engagement recess (20) is an annular engagement recess which is respectively disposed in a bottom of the containers (2).

2. The combined rack and containers according to claim 1, **characterized in that** said rack (1) is provided with a plurality of mounting keyholes (11) disposed in a rear wall thereof so that said rack (1) may be conveniently fastened to a wall.

3. The combined rack and containers according to claim 1 or 2, **characterized in that** said rack (1) is provided with a plurality of recessed holes (12) disposed in an outside surface of a bottom thereof and each of said recessed holes (12) is inserted with a non-slipping member (13) securely therein so that said rack (1) may be conveniently placed on a table top without slipping away.

4. The combined rack and containers according to one of claims 1 to 3, **characterized in that** said plurality of engagement mounts (10) of said rack (1) is designed to be in an approximately semicircular form.

5. The combined rack and containers according to one of claims 2 to 4, **characterized in that** suction cups (3) are capable of being connected with said mounting keyholes (11) of said rear wall of said rack (1) for attaching to smooth surfaces so that said rack (1) may be conveniently fastened to smooth surfaces.

## Patentansprüche

1. Kombination Regal mit Behältern, mit einem L-förmigen Regal (1), das mit mehreren auf ihm angeordneten Eingriffshalterungen (10) versehen ist; mit mehreren Behältern (2), die auf dem Regal (1) tragbar sind, wobei jeder dieser Behälter (2) mit einer Eingriffsaussparung (20) versehen ist, durch die die Behälter (2) auf dem Regal (1) haltbar sind, indem die Eingriffsaussparungen (20) der Behälter (2) entsprechend mit den Eingriffshalterungen (10) des Regals (1) in Eingriff gebracht werden, **dadurch gekennzeichnet, daß** jede Eingriffsaussparung (20) eine ringförmige Eingriffsvertiefung ist, die in einem Boden der Behälter (2) angeordnet ist.

2. Kombination Regal mit Behältern nach Anspruch 1, **dadurch gekennzeichnet, daß** jedes Regal (1) mit mehreren Befestigungsschlüssellöchern (11) versehen ist, die in der Regalrückwand so angeordnet sind, daß das Regal (1) bequem an einer Wand befestigt werden kann.

3. Kombination Regal mit Behältern nach Anspruch 1 oder 2, **dadurch gekennzeichnet, daß** das Regal (1) mit mehreren ausgesparten Löchern (12) versehen ist, die in einer äußeren Oberfläche eines Regalbodens angeordnet sind und die je einen nicht beweglichen Körper (13) aufnimmt, der so fest sitzt, daß das Regal (1) bequem auf einem Tisch plaziert werden kann, ohne wegzurutschen.

4. Kombination Regal mit Behältern nach einem der Ansprüche 1 bis 3, **dadurch gekennzeichnet, daß** die mehreren Eingriffshalterungen (10) des Regals (1) so gestaltet sind, daß sie eine annähernd halbrunde Form aufweisen.

5. Kombination Regal mit Behältern nach einem der Ansprüche 2 bis 4, **dadurch gekennzeichnet, daß** mit den Befestigungsschlüssellöchern (11) auf der Rückwand des Regals (1) Saugnäpfe (3) zur Anbringung an glatten Oberflächen verbindbar sind, so daß das Regal (1) bequem an glatten Oberflächen befestigt werden kann.

## Revendications

1. Combinaison étagère-récipients comprenant :
une étagère en forme de L (1) pourvue d'une pluralité de montures d'engagement (10) disposées sur celle-ci ;
une pluralité de récipients (2) capables d'être supportés sur ladite étagère (1) et chacun de ces récipients (2) étant pourvu d'un évidement d'engagement (20) par lequel la pluralité de récipients (2) peut être maintenue en place sur l'étagère (1) en amenant les évidements d'engagement (20) des récipients (2) respectivement en engagement avec les montures d'engagement (10) de l'étagère (1),
**caractérisée en ce que**
chaque évidement d'engagement (20) est un évidement d'engagement qui est respectivement disposé dans un fond des récipients (2).

2. Combinaison étagère-récipients selon la revendication 1, **caractérisée en ce que** ladite étagère (1) est pourvue d'une pluralité de trous à clé de montage (11) disposés dans une paroi arrière d'elle-même, de telle façon que ladite étagère (1) peut être fixée de façon appropriée sur un mur.

3. Combinaison étagère-récipients selon la revendication 1 ou 2, **caractérisée en ce que** ladite étagère (1) est pourvue d'une pluralité de trous en évidement (12) disposés dans une surface extérieure de son fond, et **en ce que** dans chacun desdits trous en évidement (12) est introduit un élément anti-glissement (13) fixé dans celui-ci de telle façon que ladite étagère (1) peut être placée de façon appropriée sur un dessus de table sans glisser.

4. Combinaison étagère-récipients selon l'une des revendications 1 à 3, **caractérisée en ce que** ladite pluralité de montures d'engagement (10) de ladite étagère (1) sont conçues pour se trouver suivant une forme approximativement semi-circulaire.

5. Combinaison étagère-récipients selon l'une des revendications 2 à 4, **caractérisée en ce que** des coupelles de succion (3) sont en mesure d'être connectées avec lesdits trous à clé de montage (11) de ladite paroi arrière de ladite étagère (1) pour être attachées à des surfaces lisses, de sorte que ladite étagère (1) peut être fixée de façon appropriée sur des surfaces lisses.
